(19) Europäisches Patentamt
European Patent Office
Office européen des brevets

(11) **EP 4 066 483 B1**

(12) **FASCICULE DE BREVET EUROPÉEN**

(45) Date de publication et mention de la délivrance du brevet:
**01.11.2023 Bulletin 2023/44**

(21) Numéro de dépôt: **20803624.4**

(22) Date de dépôt: **14.11.2020**

(51) Classification Internationale des Brevets (IPC):
**H04N 25/626** (2023.01)  **H04N 5/33** (2023.01)
**H04N 25/76** (2023.01)

(52) Classification Coopérative des Brevets (CPC):
**H04N 25/626; H04N 25/76;** H04N 5/33

(86) Numéro de dépôt international:
**PCT/EP2020/082167**

(87) Numéro de publication internationale:
**WO 2021/104905 (03.06.2021 Gazette 2021/22)**

(54) **SAISIE D'IMAGES UTILISANT DES ÉLÉMENTS SENSIBLES AU RAYONNEMENT PRÉSENTANT UNE EFFET DE MÉMOIRE**

BILDERFASSUNG ANHAND VON STRAHLUNGSEMPFINDLICHEN ELEMENTEN MIT TRÄGHEITSEFFEKT

IMAGE CAPTURE USING RADIATION SENSITIVE ELEMENTS EXHIBITING A MEMORY EFFECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.11.2019 FR 1913415**

(43) Date de publication de la demande:
**05.10.2022 Bulletin 2022/40**

(73) Titulaire: **Office National d'Etudes et de Recherches Aérospatiales**
**91120 Palaiseau (FR)**

(72) Inventeur: **KRAPEZ, Jean-Claude**
**13330 PELISSANNE (FR)**

(74) Mandataire: **Plasseraud IP**
**66, rue de la Chaussée d'Antin**
**75440 Paris Cedex 09 (FR)**

(56) Documents cités:
**EP-A1- 3 301 640       US-A1- 2005 185 755**
**US-A1- 2019 349 541**

## Description

### Domaine technique

La présente description concerne un procédé de saisie d'images qui utilise des éléments sensibles à effet de mémoire, ainsi qu'un capteur d'images qui met en oeuvre un tel procédé.

### Technique antérieure

Il existe une grande diversité de capteurs d'images, qui varient en fonction du type de rayonnements auxquels ils sont sensibles, et du mode de fonctionnement qui permet de saisir une image.

Dans la présente description, on entendra par rayonnement tous types de signaux externes susceptibles de provenir d'une scène et d'atteindre un capteur d'images, afin que des images de la scène puissent être saisies par le capteur, chacune sous forme d'un ensemble de valeurs d'intensité qui sont respectivement affectées à des points d'image disposés en matrice. En particulier, le rayonnement peut être un rayonnement électromagnétique, quel que soit le domaine de longueur d'onde, notamment les domaines des rayons X, des rayonnements ultraviolets, de la lumière visible, du proche infrarouge et de l'infrarouge dit thermique. Il peut aussi s'agir de rayonnements acoustiques, en particulier dans le domaine des ultrasons.

Le capteur d'images comprend une matrice d'éléments sensibles, qui sont aptes individuellement à produire un signal de détection variable en fonction d'une intensité du rayonnement qui est reçu par l'élément sensible. Les points d'image peuvent alors correspondre un-à-un aux éléments sensibles du capteur d'images.

L'acquisition du signal de détection pour des capteurs d'images d'un premier type procède par exposition de chaque élément sensible au rayonnement qui provient de la scène, pendant une durée déterminée qui est appelée couramment période d'accumulation. Ensuite, le signal de détection qui a été généré par le rayonnement dans l'élément sensible pendant la période d'accumulation est lu par un circuit dédié. Puis l'élément sensible est réinitialisé, entre la lecture du signal de détection qui est réalisée pour saisir une image, et le début d'une nouvelle période d'accumulation qui est dédiée à la saisie d'une image suivante. Une telle réinitialisation assure que des images qui sont saisies l'une après l'autre correspondent à des périodes d'accumulation qui sont séparées. La présente description ne concerne pas des éléments sensibles ni des capteurs d'images de ce premier type.

Elle concerne des capteurs d'images pour lesquels chaque élément sensible peut se trouver dans un état instantané variable, qui dépend du rayonnement reçu par cet élément sensible. Une image est saisie avec des capteurs de ce second type en lisant des valeurs qui sont caractéristiques des états instantanés respectifs des éléments sensibles de la matrice du capteur. Le plus souvent, aucune réinitialisation de chaque élément sensible n'est possible ou n'est mise en oeuvre entre deux images qui sont saisies successivement. Dans ce cas, le signal de détection qui est lu à partir de chaque élément sensible pour saisir une image peut dépendre non seulement du rayonnement qui est reçu par cet élément sensible à l'instant de la lecture, mais il peut dépendre en plus du rayonnement qui a été reçu préalablement par le même élément sensible. Autrement dit, le signal de détection qui est lu résulte d'un mélange des intensités de rayonnement qui ont été reçues par l'élément sensible continuellement jusqu'à l'instant de la lecture. Un tel effet est couramment appelé effet de mémoire par l'Homme du métier, et à cause de cet effet de mémoire, chaque image qui est saisie résulte d'un mélange d'états de la scène qui sont survenus successivement. Lorsque la scène varie dans le temps, l'effet de mémoire provoque une dégradation de la qualité d'image, qui peut apparaître sous des formes différentes en fonction de la nature des motifs de la scène et des déplacements de certains de ces motifs. En particulier, l'effet de mémoire des éléments sensibles d'un capteur d'images du second type peut apparaître sous forme d'une réduction du contraste d'image, d'un effet de filé qui affecte des éléments mobiles de la scène, etc.

Des méthodes ont été développées pour réduire un tel effet de mémoire, qui comprennent d'appliquer une séquence d'effacement à au moins un des éléments sensibles du capteur matriciel entre les instants de saisie de deux images successives. De telles séquences d'effacement sont appliquées par un circuit électronique dédié, parfois appelé circuit de thermalisation. De telles méthodes sont de nature matérielle, en ce sens qu'elles agissent sur les éléments sensibles du capteur d'images.

D'autres méthodes ont par ailleurs été développées pour réduire l'effet de mémoire. Elles sont de nature logicielle, et consistent à combiner entre elles plusieurs images brutes telles que résultant directement de lectures successives des éléments sensibles. Des coefficients matriciels ou scalaires sont utilisés pour produire une fonction de filtrage temporel par convolution et/ou combinaison linéaire. Mais la détermination de ces coefficients est une tâche difficile, qui peut provoquer une réduction de l'information contenue dans les images, et/ou amplifier un bruit d'image. En outre, de telles opérations de filtrage ne sont pas adaptées spécialement pour corriger un effet de mémoire des éléments sensibles du capteur d'images. La correction qui en résulte n'est alors pas optimale par rapport à l'effet de mémoire. Par exemple, la demande de brevet européenne EP 3 301 640 A1 divulgue une réduction de l'effet mémoire des bolomètres d'un capteur lorsque l'intervalle de temps entre deux trames d'image est inférieur à la constante de temps de refroidissement des bolomètres.

La demande de brevet américaine US 2005/185755 A1 divulgue un algorithme récursif de réduction de l'effet mémoire des capteurs dans un appareil de radiographie.

## Problème technique

Un but de la présente invention est alors de réduire les dégradations d'image qui sont provoquées par l'effet de mémoire pour des capteurs d'images du second type présenté ci-dessus. En particulier, l'invention a pour but d'améliorer la fonction de transfert du capteur d'images et/ou de réduire un effet de filé qui est présent dans les images lorsque des éléments de scène sont mobiles.

## Résumé de l'invention

Pour atteindre ce but ou un autre, un premier aspect de l'invention propose un procédé de saisie d'images, suivant lequel plusieurs images sont saisies successivement en utilisant une même matrice d'éléments sensibles, chaque élément sensible présentant un effet de mémoire à cause duquel un signal brut de détection de l'élément sensible dépend d'une quantité de rayonnement qui est reçue par cet élément sensible à un instant de lecture auquel le signal brut de détection est lu, mais dépend aussi de quantités de rayonnement qui ont été reçues par le même élément sensible avant l'instant de lecture.

Selon l'invention, pour former une image qui est corrigée au moins partiellement de l'effet de mémoire, appelée image corrigée, une valeur d'intensité de point d'image est attribuée séparément à chacun des éléments sensibles de la matrice, qui est proportionnelle à une différence entre le signal brut de détection de l'élément sensible tel que lu pour une nouvelle image saisie, appelée nouvelle image brute, et une partie du signal brut de détection du même élément sensible tel que lu pour une autre image qui a été saisie avant la nouvelle image brute, et qui est appelée image brute antérieure.

Grâce à une telle correction, la dégradation d'image qui est causée par l'effet de mémoire des éléments sensibles pour chaque image brute qui est constituée par les signaux bruts de détection tels que lus à partir des éléments sensibles, est réduite dans l'image corrigée qui est constituée par les valeurs d'intensités de points d'image. L'image brute antérieure est utilisée pour évaluer une partie au moins du contenu de l'effet de mémoire, et cette partie de contenu d'effet de mémoire est soustraite au contenu de la nouvelle image brute, séparément pour chaque élément sensible. L'image corrigée résultante correspond alors principalement au rayonnement qui a été reçu par chaque élément sensible entre les deux instants de lecture des images brutes.

Une telle correction d'effet de mémoire, qui consiste à utiliser des images constituées par les valeurs d'intensités de points d'images calculées selon l'invention, à la place des images brutes constituées par les signaux bruts de détection tels que lus dans les éléments sensibles, peut être d'autant plus efficace que les images brutes dites nouvelle et antérieure sont saisies avec une faible durée entre les instants de lecture des éléments sensibles. Pour cela, lorsque plusieurs images brutes antérieures ont été saisies avant la nouvelle image brute, celle qui est utilisée pour calculer les valeurs d'intensités de points d'image pour l'image corrigée peut être de préférence la dernière des images brutes antérieures saisies avant la nouvelle image brute, selon l'ordre chronologique de saisie des images brutes.

Dans l'invention, la valeur d'intensité de point d'image qui est attribuée à chacun des éléments sensibles pour former l'image corrigée, est proportionnelle à une différence entre le signal brut de détection de l'élément sensible tel que lu pour la nouvelle image brute, et un résultat d'une multiplication par $\exp(-\Delta/\tau)$ du signal brut de détection du même élément sensible tel que lu pour l'image brute antérieure. $\exp(.)$ désigne une fonction exponentielle, $\tau$ est un temps caractéristique de réponse de l'élément sensible, et $\Delta$ est une durée non-nulle entre les instants de lecture de l'élément sensible respectivement pour la nouvelle image brute et l'image brute antérieure. Une telle combinaison de la nouvelle image brute et de l'image brute antérieure, pour produire l'image corrigée, est d'autant plus appropriée qu'un fonctionnement de chaque élément sensible correspond à une fonction de transfert qui est d'ordre un par rapport au temps, ou peut être décrit approximativement par une telle fonction de transfert d'ordre un par rapport au temps. Dans le cadre de la présente invention, on appelle fonction de transfert, notée f(s), d'un élément sensible au rayonnement le quotient de la transformée de Laplace du signal brut de détection qui est produit par l'élément sensible en réponse au rayonnement incident, par la transformée de Laplace de l'intensité du rayonnement incident. Autrement dit : $f(s)=A_d(s)/A_R(s)$, où s désigne la variable de Laplace, f est la fonction de transfert de l'élément sensible, $A_R$ désigne la transformée de Laplace de l'intensité du rayonnement qui est incident sur l'élément sensible, et $A_d$ désigne la transformée de Laplace du signal brut de détection qui est produit par l'élément sensible. Cette fonction de transfert est dite d'ordre un par rapport au temps lorsqu'elle est de la forme: $$f(s) = \frac{G}{1+\tau \cdot s}$$ , où G est un coefficient de gain et $\tau$ un temps caractéristique de réponse, qui sont fixes pour chaque élément sensible. La correction d'effet de mémoire qui est procurée par les modes de mise en oeuvre préférés de l'invention est particulièrement adaptée pour des éléments sensibles à fonction de transfert d'ordre un par rapport au temps. Mais elle est aussi efficace pour des éléments sensibles qui ne sont pas à fonction de transfert d'ordre un par rapport au temps, en procurant une correction partielle de l'effet de mémoire.

Pour de tels modes de mise en oeuvre préférés de l'invention, la valeur d'intensité de point d'image qui est attribuée à chaque élément sensible pour former l'image corrigée, est proportionnelle à un résultat d'une division par $[1 - \exp(-\Delta/\tau)]$ de la différence entre le signal brut de détection de l'élément sensible tel que lu pour la nouvelle image brute, et le résultat de la multiplication par exp(-Δ/τ) du signal brut de détection du même élément sensible tel que lu pour l'image brute antérieure. La division par [1 - exp(-Δ/τ)] peut notamment éviter une atténuation de l'intensité de l'image corrigée, qui pourrait être d'autant plus importante que la durée Δ entre les instants de lecture respectifs de la nouvelle image brute et de l'image brute antérieure, est courte. Eventuellement, un facteur de proportionnalité supplémentaire peut être appliqué, en plus de 1/[1 - exp(-Δ/τ)], pour adapter l'échelle des valeurs d'intensités de points d'image de l'image corrigée de l'effet de mémoire. Ce facteur de proportionnalité supplémentaire peut être constant, en ce sens qu'il ne dépend pas de la durée Δ entre les instants de lecture respectifs de la nouvelle image brute et de l'image brute antérieure, ni du temps caractéristique de réponse τ.

Dans divers modes de mise en oeuvre de l'invention, y compris les modes préférés précités, l'une au moins des caractéristiques additionnelles suivantes peut être reproduite optionnellement, seule ou en combinaison de plusieurs d'entre elles :

- la durée Δ entre les instants de lecture respectifs d'un même élément sensible respectivement pour la nouvelle image brute et pour l'image brute antérieure, peut être inférieure au temps caractéristique de réponse τ de cet élément sensible ;
- la durée Δ entre les instants de lecture d'un même élément sensible respectivement pour la nouvelle image brute et l'image brute antérieure, peut être comprise entre 0,02 et 0,2 fois le temps caractéristique de réponse τ de cet élément sensible ;
- chaque élément sensible peut être un bolomètre ou un microbolomètre, une thermopile, un capteur pyroélectrique, un capteur ferroélectrique, ou un capteur à microlevier déformable thermiquement ;
- les éléments sensibles de la matrice peuvent être sensibles à du rayonnement électromagnétique, y compris du rayonnement infrarouge, notamment infrarouge thermique, des rayons X, du rayonnement sonore, notamment du rayonnement ultrasonore, etc. ;
- une même valeur du temps caractéristique de réponse τ peut être commune à tous les éléments sensibles de la matrice ;
- le procédé peut comprendre une étape préalable lors de laquelle une valeur du temps caractéristique de réponse τ est déterminée séparément pour chacun des éléments sensibles de la matrice. Alors, la valeur du temps caractéristique de réponse τ qui a été ainsi déterminée pour chacun des éléments sensibles peut être utilisée pour calculer la valeur d'intensité de point d'image qui lui est attribuée pour former l'image corrigée ;
- chaque image corrigée peut être formée à partir d'un couple d'images brutes, comprenant une nouvelle image brute et une image brute antérieure qui a été saisie avant la nouvelle image brute. Alors, les couples d'images brutes qui sont utilisés pour former des images corrigées successives, peuvent être disjoints, non-entrelacés et successifs chronologiquement ; et
- plusieurs images corrigées peuvent être formées en combinant une même nouvelle image brute avec plusieurs images brutes antérieures qui ont été saisies successivement et antérieurement à la nouvelle image brute. Dans ce cas, chaque image corrigée est obtenue en utilisant pour la durée Δ qui est relative à chaque élément sensible, la différence entre les instants de lecture de cet élément sensible respectivement pour la nouvelle image brute et pour l'image brute antérieure qui est utilisée pour former cette image corrigée. Une réduction progressive d'un effet de filé peut alors être observée en comparant entre elles les images corrigées qui ont été obtenues de cette manière. Eventuellement, cette réduction de l'effet de filé peut permettre d'évaluer une vitesse de déplacement de certains éléments de la scène imagée qui sont mobiles.

Un second aspect de l'invention propose un capteur d'images qui comprend :

- une matrice d'éléments sensibles, chaque élément sensible présentant un effet de mémoire à cause duquel un signal brut de détection qui est lu à partir de cet élément sensible dépend d'une quantité de rayonnement reçue par l'élément sensible à un instant de lecture auquel le signal brut de détection est lu, mais dépend aussi de quantités de rayonnement reçues par le même élément sensible avant l'instant de lecture, et
- un module de traitement d'images, adapté pour fournir en sortie des images corrigées au moins partiellement de l'effet de mémoire, chaque image corrigée étant formée par des valeurs d'intensités de points d'image qui sont attribuées respectivement aux éléments sensibles de la matrice, le module de traitement d'images étant adapté pour calculer la valeur d'intensité de point d'image de l'un quelconque des éléments sensibles comme étant proportionnelle à une différence entre le signal brut de détection de l'élément sensible tel que lu pour une nouvelle image brute, et une partie du signal brut de détection du même élément sensible tel que lu pour une image brute antérieure, qui a été saisie avant la nouvelle image brute.

Un tel capteur d'images peut être adapté pour mettre en oeuvre un procédé qui est conforme au premier aspect de l'invention, optionnellement y compris selon ses modes de mise en oeuvre préférés et ses caractéristiques additionnelles facultatives.

## Brève description des figures

Les caractéristiques et avantages de la présente invention apparaîtront plus clairement dans la description détaillée ci-après d'exemples de mises en oeuvre non-limitatifs, en référence aux figures annexées parmi lesquelles :

[Fig. 1] est un schéma synoptique d'un capteur d'images conforme à l'invention ;

[Fig. 2] à [Fig. 4] illustrent différentes séquences de production d'images corrigées, qui sont conformes à l'invention ;

[Fig. 5] illustre un premier avantage de l'invention, concernant un contraste d'images ; et

[Fig. 6] illustre un second avantage de l'invention, concernant un effet de filé possiblement présent dans les images.

## Description détaillée de l'invention

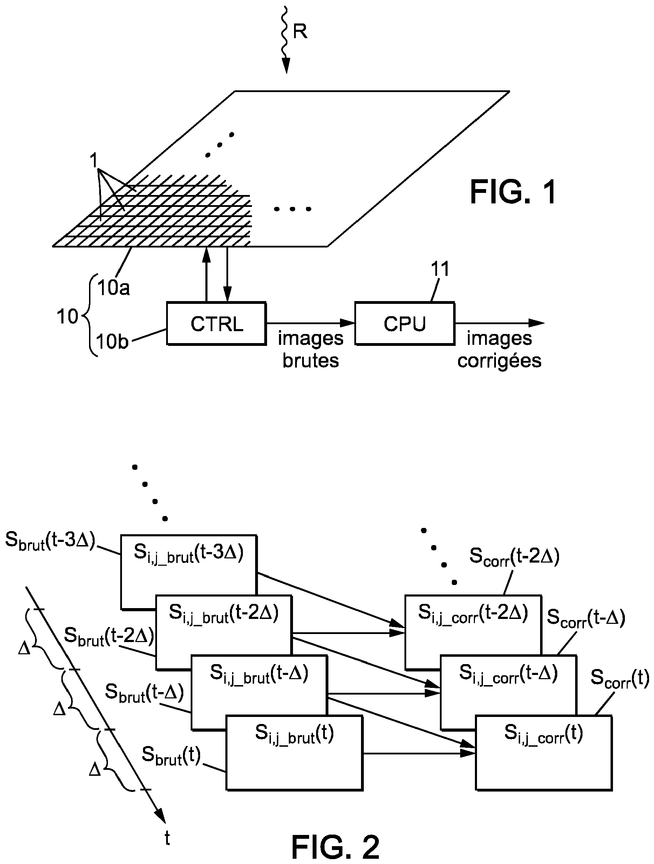

Conformément à [Fig. 1], un capteur d'images 10 comprend une matrice 10a d'éléments sensibles 1, qui sont disposés aux intersections de lignes et de colonnes de la matrice, et peuvent être considérés comme indépendants les uns des autres. Par exemple, la matrice 10a peut être constituée par 320 x 240 éléments sensibles 1. Tous les éléments sensibles 1 peuvent être identiques, notamment d'un modèle connu de l'Homme du métier. Par exemple, chaque élément sensible 1 peut être un microbolomètre. Il comprend alors une portion d'un matériau conducteur électriquement dont la valeur de résistance électrique varie en fonction de sa température. Cette portion de matériau à résistance électrique variable est au moins partiellement isolée thermiquement de son environnement, de sorte que du rayonnement R qui est reçu et absorbé par cette portion provoque une augmentation de sa température, et par suite une variation de sa valeur de résistance électrique. Cette valeur de résistance électrique constitue le signal brut de détection qui est lu pour chaque image saisie. Un tel principe de mesure est très connu, de sorte qu'il n'est pas nécessaire de le décrire à nouveau ici.

Il est aussi connu qu'un microbolomètre de ce type possède une fonction de transfert d'ordre un par rapport au temps, qui est caractérisée par une valeur d'un coefficient de gain noté G, et par une valeur d'un temps caractéristique de réponse noté $\tau$. La fonction de transfert, qui est notée f(s) et dépend de la variable de Laplace s, est alors $f(s) = \frac{G}{1+\tau \cdot s}$. En régime d'éclairement avec une intensité du rayonnement R qui varie sinusoïdalement en fonction du temps selon une fréquence v, le signal de détection qui est produit par l'élément sensible varie aussi dans le temps à la fréquence v, avec une amplitude qui est donnée par la formule $A_d$ = f(j2$\pi$ · v) ·$A_R$, où $A_R$ est l'amplitude complexe de l'intensité du rayonnement R, $A_d$ est l'amplitude complexe du signal brut de détection, et j est l'unité imaginaire des nombres complexes. Couramment, le temps caractéristique de réponse $\tau$ peut être compris entre 7 ms (milliseconde) et 15 ms, et la valeur du gain G dépend notamment des caractéristiques géométriques et thermiques de l'élément sensible. Le signal de détection qui est produit par l'élément sensible dépend de l'intensité du rayonnement R qui a été reçu à chaque instant jusqu'au moment où le signal de détection est lu. Ce comportement est appelé effet de mémoire, et réduit la sensibilité de l'élément sensible à des variations de l'intensité du rayonnement R qui sont rapides. Cette réduction de sensibilité est due à un effet de mélange pondéré des valeurs instantanées de l'intensité du rayonnement qui a été reçu antérieurement par l'élément sensible. Il en résulte un lissage temporel de ces valeurs dans les signaux de détection qui sont produits par l'élément sensible. Le temps caractéristique de réponse $\tau$ définit l'échelle de temps selon laquelle intervient une contribution au signal de détection qui est lu, du rayonnement qui a été reçu à un instant antérieur à celui de la lecture du signal de détection. Une telle contribution à la valeur du signal de détection qui est lue est affectée par un facteur multiplicatif d'atténuation du type exp(-t/$\tau$), qui s'applique à l'intensité du rayonnement reçu avant l'instant de la lecture, où t est la durée entre l'instant auquel le rayonnement a été reçu par l'élément sensible et l'instant de la lecture.

Pour constituer le capteur d'images 10, la matrice 10a des éléments sensibles 1 est associée à un contrôleur 10b, noté CTRL. De façon connue, le contrôleur 10b possède les fonctions d'alimentation électrique et de lecture pour chacun des éléments sensibles 1, une fonction d'adressage de chaque élément sensible 1 au sein de la matrice 10a, et éventuellement des fonctions supplémentaires telle qu'une fonction de test des éléments sensibles 1, une fonction optionnelle de thermalisation de certains aux moins des éléments sensibles, et une numérisation des signaux de détection. A chaque cycle de lecture de tous les éléments sensibles 1 de la matrice 10a, le contrôleur 10b transmet en sortie les valeurs des signaux de détection qui ont été lues à partir de tous les éléments sensibles 1, à raison d'une valeur de signal de détection qui est lue par élément sensible pour chaque image qui est saisie. La lecture de ces signaux de détection, qui ont été appelés signaux bruts de détection dans la partie générale de la présente description, constituent une opération de saisie d'image, et l'image qui est ainsi obtenue directement est appelée image brute. La lecture de la matrice des éléments sensibles peut être réalisée selon l'un des deux modes suivants : par obturateur déroulant, correspondant au mode appelé «rolling shutter» en anglais, ou par obturateur global, correspondant au mode «snapshot». Dans le premier cas, la lecture des lignes de la matrice est réalisée séquentiellement, ligne par ligne, et dans le second cas, la lecture est réalisée à un même instant pour toutes les lignes. Cette différence de mode de lecture du capteur d'images n'affecte en rien le principe de l'invention, ni les résultats. La description détaillée qui suit est fournie à titre d'exemple non-limitatif pour le mode de lecture par obturateur global. Pour la transposer au cas d'une lecture d'images par obturateur déroulant, on peut considérer par exemple les instants de lecture qui sont mentionnés dans la suite comme étant ceux de la première ligne de la matrice.

Bien que non représentée dans [Fig. 1], une optique peut être utilisée en avant de la matrice 10a, pour conjuguer optiquement une scène à imager avec la matrice 10a des éléments sensibles 1. Le rayonnement R traverse alors cette optique de conjugaison avant d'être incident sur les éléments sensibles 1.

Pour l'invention, le capteur d'images 10 comprend en outre un module de traitement d'images 11, qui est connecté pour recevoir en entrée les images brutes transmises en sortie par le contrôleur 10b. Le module 11 est conçu pour produire des images traitées à partir des images brutes, afin de compenser ou corriger au moins partiellement l'effet de mémoire des éléments sensibles 1 qui a été décrit plus haut. Pour cette raison, les images traitées produites selon l'invention par le capteur d'images incluant le module 11, sont appelées images corrigées. Le module de traitement d'images 11 peut être un circuit électronique dédié, ou être un module logiciel qui est hébergé dans une unité de calcul, notée CPU.

Selon l'invention, le module de traitement d'images 11 produit une image corrigée à partir d'une image brute, en soustrayant à cette image brute une autre image brute qui a été saisie antérieurement, multipliée par un coefficient déterminé. On entend par multiplication d'une image brute par un coefficient l'opération qui consiste à multiplier par ce coefficient tous les signaux bruts de détection qui constituent l'image brute. En outre, on entend par soustraction d'une première image à une seconde image l'opération qui consiste, indépendamment pour chaque élément sensible 1, à calculer la différence entre le signal de détection qui a été lu pour la seconde image et celui lu pour la première image. Ainsi, selon l'invention, une image corrigée notée $S_{corr}(t)$, peut être obtenue en calculant et en regroupant les valeurs $S_{i,jcorr}(t) = \beta \cdot [S_{i,j\_brut}(t) - \alpha \cdot S_{i,j\_brut}(t - \Delta)]$, où t est l'instant de lecture d'une nouvelle image brute, notée $S_{brut}(t)$ et constituée par des signaux bruts de détection $S_{i,j\_brut}(t)$, $t-\Delta$ est l'instant de lecture d'une image brute antérieure, notée $S_{brut}(t-\Delta)$ et constituée par des signaux bruts de détection $S_{i,j\_brut}(t-\Delta)$, $\Delta$ est la durée entre les instants de lecture des deux images brutes $S_{brut}(t)$ et $S_{brut}(t-\Delta)$, et $S_{i,j\_brut}(t)$ est le signal brut de détection tel que lu à l'instant t pour l'élément sensible i,j dans la matrice 10a, i et j étant respectivement les numéros de ligne et de colonne de l'élément sensible considéré. $\alpha$ est le coefficient multiplicatif qui est appliqué à l'image brute antérieure $S_{brut}(t-\Delta)$, et $\beta$ est un coefficient multiplicatif global. $\alpha$ et $\beta$ sont

positifs et non-nuls. $S_{i,j\_corr}(t)$ est alors la valeur d'intensité de point d'image de l'image corrigée $S_{corr}(t)$, pour le point d'image qui est associé à l'élément sensible situé à l'intersection de la $i^{ème}$ ligne avec la $j^{ème}$ colonne de la matrice 10a.

Le coefficient $\alpha$, et le coefficient $\beta$, sont sélectionnés pour varier en fonction de la durée entre les instants de lecture des deux images brutes $S_{brut}(t-\Delta)$ et $S_{brut}(t)$, qui sont constituées séparément par les signaux bruts de lecture $S_{i,j\_brut}(t-A)$ et $S_{ij\_brut}(t)$.

Eventuellement, mais de façon facultative, l'un au moins des coefficients $\alpha$ et $\beta$ peut avoir des valeurs qui sont différentes pour des éléments sensibles 1 qui sont distincts dans la matrice 10a. Dans ce cas, les valeurs des coefficients $\alpha$ et $\beta$ peuvent être déterminées séparément pour chaque élément sensible 1, lors d'une étape de calibration ou d'étalonnage qui peut être effectuée avant chaque séquence de saisie d'images, ou en laboratoire.

Le coefficient $\alpha$ est déterminé conformément à l'équation :

$$\alpha = \exp\left(-\frac{\Delta}{\tau}\right)$$

, où $\Delta$ désigne encore la durée entre les instants respectifs de lecture de l'élément sensible pour les deux images brutes $S_{brut}(t-\Delta)$ et $S_{brut}(t)$, et $\tau$ désigne encore le temps caractéristique de réponse de l'élément sensible. Eventuellement, la valeur qui est utilisée pour le temps caractéristique de réponse $\tau$ peut varier en fonction de l'élément sensible 1 à l'intérieur de la matrice 10a. Dans ce cas, les valeurs du temps caractéristique de réponse $\tau$ pour tous les éléments sensibles 1 peuvent avoir été déterminées séparément pour chaque élément sensible lors de l'étape de calibration ou d'étalonnage, effectuée avant chaque séquence de saisie d'images ou en laboratoire. Elles sont ensuite mémorisées au sein du l'unité de traitement d'images 11 ou dans une unité de mémoire qui est accessible par l'unité 11.

Dans l'invention, le coefficient $\beta$ est déterminé

$$\beta = \frac{a}{1 - \exp\left(-\frac{\Delta}{\tau}\right)}$$

conformément à l'équation : , où a est un coefficient constant non-nul qui peut fixer une échelle pour les valeurs d'intensité de point d'image des images corrigées. Pour ces mises en oeuvre, la valeur d'intensité de point d'image de l'image corrigée Scorr(t) pour l'élé-

$$S_{i,jcorr}(t) = \frac{a}{1 - \exp\left(-\frac{\Delta}{\tau}\right)}$$

ment sensible i,j est alors .

$[S_{i,j\_brut}(t) - e^{-\Delta/\tau} \cdot S_{i,j\_brut}(t - \Delta)]$. L'utilisation d'une telle valeur pour le coefficient $\beta$ permet de réduire des effets d'atténuation de l'intensité de l'image corrigée lorsque la durée $\Delta$ entre les instants respectifs de lecture des deux images brutes est courte.

Les expressions citées précédemment pour le coefficient $\alpha$, et éventuellement aussi pour le coefficient $\beta$, permettent de corriger l'effet de mémoire de façon particulièrement efficace lorsque l'élément sensible est d'un type à fonction de transfert du premier ordre par rapport au temps, tel que décrit plus haut. En effet, dans ce cas, l'image brute $S_{brut}(t-\Delta)$, correspondant à l'image brute antérieure telle que désignée dans la partie générale de la présente description, lorsqu'elle est multipliée par $\alpha=\exp(-\Delta/\tau)$ quantifie la contribution d'effet de mémoire qui est associée à tout le rayonnement reçu par chaque élément sensible avant la saisie de cette image brute antérieure. Cette contribution d'effet de mémoire, qui peut être appelée effet de mémoire à long terme et qui contribue à la nouvelle image brute $S_{brut}(t)$, est alors complètement supprimée par l'invention dans l'image corrigée $S_{corr}(t)$. Toutefois, une autre contribution d'effet de mémoire, qui est associée au rayonnement reçu par chaque élément sensible pendant la durée $\Delta$ entre les instants respectifs de lecture des deux images brutes, reste. Elle peut être appelée effet de mémoire à court terme.

Lorsqu'un élément sensible n'est pas d'un type à fonction de transfert du premier ordre par rapport au temps, l'expression du coefficient $\alpha$ en fonction du temps caractéristique de réponse $\tau$ et de la durée $\Delta$ peut encore être utilisée. Pour cela, une valeur empirique qui est adaptée à l'élément sensible considéré peut être adoptée pour le temps caractéristique de réponse $\tau$, même si cette valeur n'a pas de signification théorique par rapport à la fonction de transfert f(s) de l'élément sensible.

[Fig. 2] illustre une saisie de séquence vidéo, lors de laquelle des images brutes sont saisies périodiquement à des instants de lecture séparés d'une durée $\Delta$. Ainsi, une dernière image brute $S_{brut}(t)$ est constituée par les signaux bruts de détection $S_{ij\_brut}(t)$ lus à l'instant t, une image brute juste précédente $S_{brut}(t-\Delta)$ est constituée par les signaux bruts de détection $S_{i,j\_brut}(t-A)$ lus à l'instant t-$\Delta$, une image brute encore précédente $S_{brut}(t-2\Delta)$ est constituée par les signaux bruts de détection $S_{i,j\_brut}(t-2\Delta)$ lus à l'instant t-2$\Delta$, une autre image brute encore précédente $S_{brut}(t-3\Delta)$ est constituée par les signaux bruts de détection $S_{i,j\_brut}(t-3\Delta)$ lus à l'instant t-3$\Delta$, etc. Alors une séquence vidéo corrigée qui est constituée d'images corrigées selon l'invention, peut être construite avec la même fréquence d'images égale à 1/$\Delta$, en combinant chaque image brute avec la dernière lue juste avant elle. Ainsi, les images brutes $S_{brut}(t)$ et $S_{brut}(t-\Delta)$ sont combinées pour obtenir selon l'invention l'image corrigée $S_{corr}(t)$, constituée par les valeurs d'intensité de point d'image $S_{i,j\_corr}(t)$, les images brutes $S_{brut}(t-\Delta)$ et $S_{brut}(t-2\Delta)$ sont combinées pour obtenir selon l'invention l'image corrigée $S_{corr}(t-\Delta)$, constituée par les valeurs d'intensité de point d'image $S_{i,j\_corr}(t-\Delta)$, les images brutes $S_{brut}(t-2\Delta)$ et $S_{brut}(t-3\Delta)$ sont combinées pour obtenir selon l'invention l'image corrigée $S_{corr}(t-2\Delta)$, constituée par les valeurs d'intensité de point d'image $S_{i,j\_corr}(t-2\Delta)$, etc. L'axe à gauche dans [Fig. 2] correspond à la coordonnée temporelle, notée t. Le capteur d'images de l'invention peut alors comprendre un système d'affichage qui est commandé pour afficher les images corrigées, et éventuellement aussi les images brutes selon une correspondance temporelle. Une amélioration de contraste d'image et une atténuation du filé qui résultent de la correction de l'effet de mémoire à long terme peuvent ainsi être appréciées. Ce mode de correction des images dans une séquence vidéo est adapté notamment pour obtenir une séquence d'images corrigées à la cadence maximale de saisie d'images qui est possible pour la matrice 10a et le contrôleur 10b.

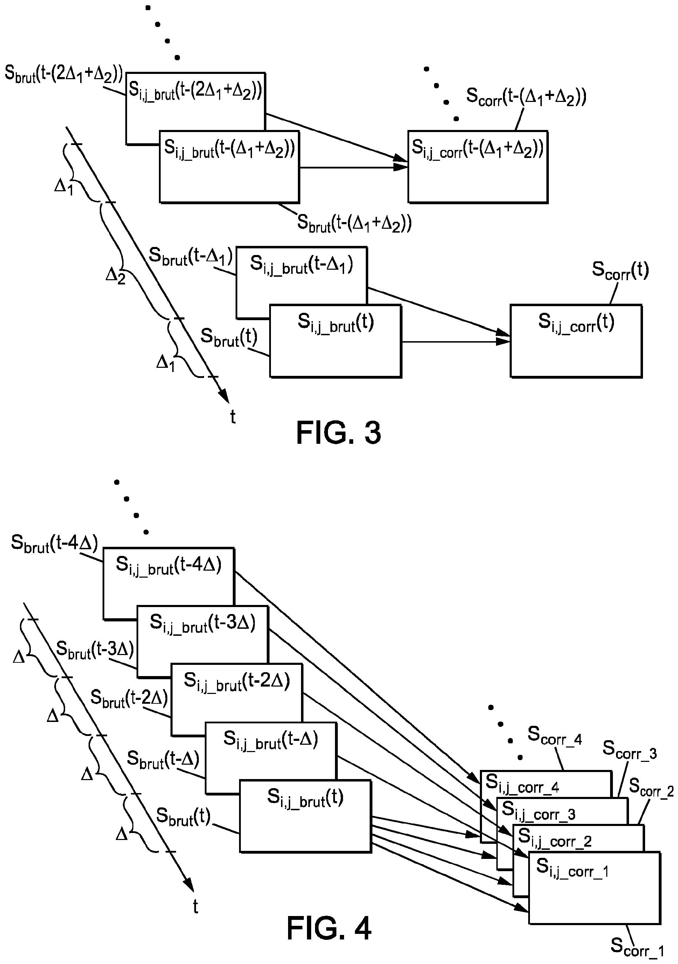

[Fig. 3] correspond à [Fig. 2] lorsque chaque image corrigée est obtenue en combinant deux images brutes successives avec les couples d'images brutes dédiées à des images corrigées différentes, qui sont disjoints, non-entrelacés et successifs. Ainsi, les images brutes $S_{brut}(t)$ et $S_{brut}(t-\Delta_1)$, qui sont constituées par les signaux bruts de détection $S_{i,j\_brut}(t)$ et $S_{i,j\_brut}(t-\Delta_1)$), sont combinées pour obtenir selon l'invention l'image corrigée $S_{corr}(t)$. De même, les images brutes $S_{brut}(t-(\Delta_1+\Delta_2))$ et $S_{brut}(t-(2\Delta_1+\Delta_2))$, qui sont constituées par les signaux bruts de détection $S_{i,j\_brut}(t-(\Delta_1+\Delta_2))$ et $S_{i,j\_brut}(t-(2\Delta_1+\Delta_2))$, sont combinées pour obtenir selon l'invention l'image corrigée $S_{corr}(t-(\Delta_1+\Delta_2))$, constituée par les valeurs d'intensité de point d'image $S_{i,j\_corr}(t-(\Delta_1+\Delta_2))$, etc. $\Delta_1$ est la durée entre les instants de lecture des deux images brutes d'un même couple, pour obtenir l'image corrigée correspondante, et $\Delta_2$ est la durée entre les instants de lecture de l'image brute antérieure du dernier couple et de la nouvelle image brute du couple précédent. La fréquence vidéo des images corrigées est alors 1/$(\Delta_1+\Delta_2)$. Cet autre mode de correction des images dans une séquence vidéo est adapté pour obtenir une vidéo d'images corrigées à faible fréquence, tout en pouvant utiliser une durée courte entre les deux images brutes qui sont combinées pour obtenir chaque image corrigée.

[Fig. 4] correspond de nouveau à [Fig. 2] en reprenant une séquence vidéo d'images brutes qui sont saisies à la fréquence 1/$\Delta$. Mais cette fois, une série d'images corrigées est produite en combinant à chaque fois la même dernière image brute saisie avec une image brute différente en remontant chronologiquement et progressivement les images brutes antérieures dans la séquence vidéo. Ainsi, une première image corrigée $S_{corr-1}$, constituée par les valeurs d'intensité de point d'image $S_{i,j\_corr\_1}$, est obtenue en combinant les images brutes $S_{brut}(t)$ et $S_{brut}(t-\Delta)$ constituées séparément par les signaux bruts de détection $S_{i,j\_brut}(t)$ et $S_{i,j\_brut}(t-\Delta)$, en utilisant les coefficients

$$\alpha = \exp\left(-\frac{\Delta}{\tau}\right) \text{ et } \beta = \frac{a}{1-\exp\left(-\frac{\Delta}{\tau}\right)}$$

. Une deuxième image corrigée $S_{corr\_2}$, constituée par les valeurs d'intensité de point d'image $S_{i,j\_corr-2}$, est obtenue en reprenant l'image brute $S_{brut}(t)$ et en la combinant avec celle $S_{brut}(t-2\Delta)$ constituée par les signaux bruts de détection $S_{i,j\_brut}(t-2\Delta)$, en utilisant

les coefficients $\alpha = \exp\left(-\frac{2\cdot\Delta}{\tau}\right)$ et $\beta = \frac{a}{1-\exp\left(-\frac{2\cdot\Delta}{\tau}\right)}$. Une troisième image corrigée $S_{corr\_3}$, constituée par les valeurs d'intensité de point d'image $S_{i,j\_corr\_3}$ est obtenue en combinant l'image brute $S_{brut}(t)$ avec celle $S_{brut}(t-3\Delta)$ constituée par les signaux bruts de détection $S_{i,j\_brut}(t-3\Delta)$, en utilisant les coefficients $\alpha = \exp\left(-\frac{3\cdot\Delta}{\tau}\right)$ et $\beta = \frac{a}{1-\exp\left(-\frac{3\cdot\Delta}{\tau}\right)}$. De même, une quatrième image corrigée $S_{corr\_4}$, constituée par les valeurs d'intensité de point d'image $S_{i,j\_corr\_4}$, est obtenue en combinant l'image brute $S_{brut}(t)$ avec celle $S_{brut}(t-4\Delta)$ constituée par les signaux bruts de détection $S_{i,j\_brut}(t-4\Delta)$, en utilisant les coefficients $\alpha = \exp\left(-\frac{4\cdot\Delta}{\tau}\right)$ et $\beta = \frac{a}{1-\exp\left(-\frac{4\cdot\Delta}{\tau}\right)}$. Etc. L'ensemble des images corrigées qui sont ainsi obtenues permet d'apprécier les effets de la durée entre les images brutes qui sont combinées selon l'invention, sur la qualité des images corrigées. Certains de ces effets avantageux sont présentés maintenant : meilleur rendu des fréquences spatiales élevées dans l'image en présence d'un mouvement latéral, et réduction de l'effet de filé.

## Rendu des fréquences spatiales d'image en présence d'un mouvement latéral.

Il est connu qu'une façon de mettre en évidence l'atténuation de la fonction de transfert temporelle d'une matrice d'éléments sensibles consiste à saisir une image d'un motif spatial qui est périodique et déplacé à vitesse constante parallèlement à sa direction de périodicité. Chaque élément sensible reçoit ainsi un rayonnement dont l'intensité instantanée varie périodiquement selon une valeur de fréquence temporelle qui est égale au produit de la vitesse apparente de déplacement par la période du motif. Une scène qui est constituée de bandes parallèles à la direction des colonnes de la matrice 10a, et dont la luminance varie sinusoïdalement parallèlement à la direction des lignes de la matrice 10a, est imagée sur la matrice 10a des éléments sensibles 1. La fréquence spatiale de ces bandes dans l'image de la scène est notée $v_s$, pouvant être exprimée en pixels$^{-1}$. Cette scène est mobile à vitesse constante parallèlement aux lignes de la matrice 10a, et V désigne la vitesse de déplacement de l'image de la scène sur la matrice 10a, pouvant être exprimée en pixels/s (pixels par seconde). On suppose que tous les éléments sensibles 1 ont la même valeur pour le temps caractéristique de réponse $\tau$, et que leur

fonction de transfert commune est f(s) $f(s) = \frac{G}{1+\tau\cdot s}$.

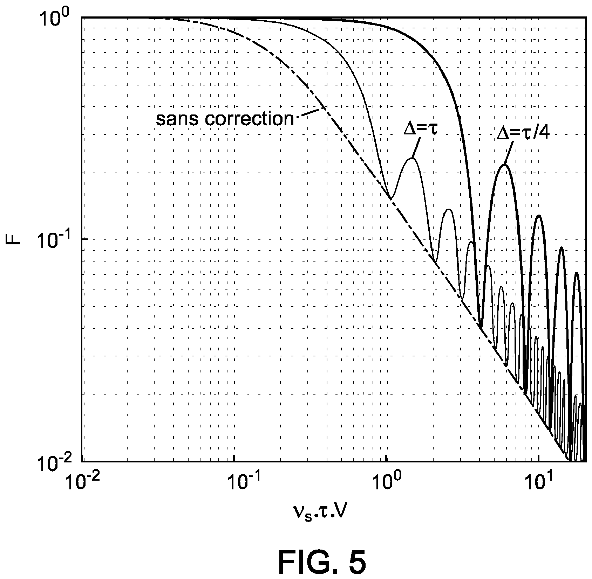

[Fig. 5] est un diagramme qui illustre les variations de la fonction de transfert apparente du capteur d'images, en fonction de la fréquence spatiale d'image $v_s$ ou de la vitesse de déplacement V. L'axe horizontal du diagramme repère les valeurs de la fréquence spatiale $v_s$, multipliée par le temps caractéristique de réponse $\tau$ et par la vitesse V, pour obtenir une variable adimensionnée. Le produit $V \cdot v_s$ correspond à la fréquence temporelle de variation de l'intensité du rayonnement qui est reçu par chaque élément sensible. L'axe vertical repère les valeurs F de l'amplitude de la fonction de transfert apparente du capteur d'images. La courbe qui apparaît en position inférieure dans [Fig. 5], et qui est désignée par la mention «sans correction», correspond aux signaux bruts de détection $S_{i,j\_brut}$ tels que délivrés par le contrôleur 10b, avant correction d'effet mémoire, en tant que fonctions de la vitesse V ou de la fréquence spatiale $v_s$. Ce sont donc les signaux de lecture qui constituent chaque image brute saisie pendant le déplacement de la scène. La courbe qui est désignée par $\Delta=\tau$ correspond aux valeurs d'intensité de point d'image d'une image corrigée qui est obtenue en combinant deux images brutes saisies pendant le déplacement de la scène à des instants de lecture séparés par une durée $\Delta$ qui est égale à $\tau$. De façon similaire, la courbe qui est désignée par $\Delta=\tau/4$ correspond aux valeurs d'intensité de point d'image d'une image corrigée qui est obtenue en combinant deux images brutes saisies pendant le déplacement de la scène à des instants de lecture séparés par une durée $\Delta$ qui est égale à $\tau/4$. Ces images corrigées utilisent des valeurs pour le coefficient $\beta$ qui sont calculées pour chacune d'elles comme indiqué plus haut dans la présente description. L'augmentation générale de l'amplitude de la fonction de transfert F du capteur d'images en passant de l'image brute à l'image corrigée avec $\Delta=\tau$, puis à l'image corrigée avec $\Delta=\tau/4$, correspond à une correction croissante de l'effet de mémoire des éléments sensibles 1. Autrement dit, l'effet de mémoire à court terme qui n'est pas compensé dans les images corrigées est de plus en plus réduit. Le gain d'amplitude de la fonction de transfert F du capteur d'images, par rapport à l'image brute lorsque la fréquence spatiale adimensionnée est supérieure à 1,0, est d'environ 2,1 pour l'image corrigée avec $\Delta=\tau$, en dehors de fréquences spatiales particulières correspondant à des valeurs entières pour $v_s \cdot \tau \cdot V$. Pour ces fréquences spatiales particulières, dites fréquences aveugles, les deux images brutes qui sont combinées pour obtenir l'image corrigée, sont identiques, de sorte que la correction d'effet de mémoire n'a pas d'effet. Pour l'image corrigée avec $\Delta=\tau/4$, le gain d'amplitude de la fonction de transfert F du capteur d'images, encore par rapport à l'image brute mais lorsque la fréquence spatiale adimensionnée est supérieure à 2,0, est d'environ 8, et les fréquences aveugles correspondent à des valeurs pour $v_s \cdot \tau \cdot V$ qui sont

multiples de quatre.

Effet de filé.

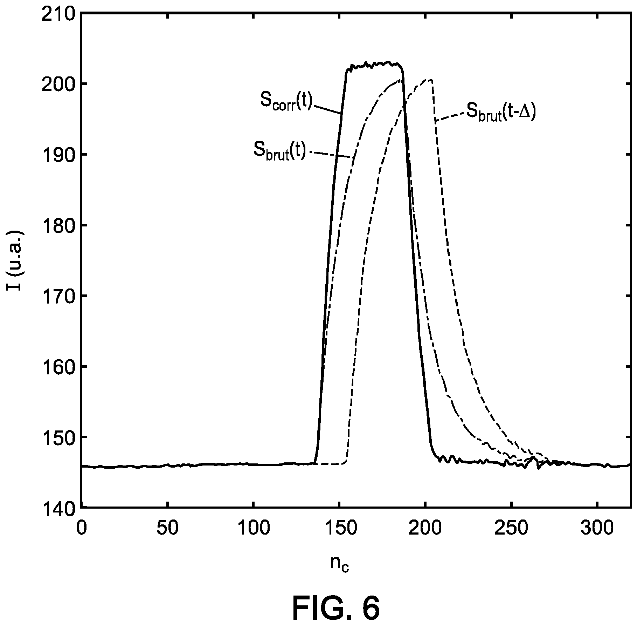

La matrice 10a utilisée comprend 320 colonnes et 240 lignes d'éléments sensibles 1, et le temps caractéristique de réponse $\tau$ de tous les éléments sensibles est d'environ 14 ms. Un capteur d'images qui est constitué à partir de cette matrice d'éléments sensibles saisit une séquence vidéo d'un fond de scène uniforme constitué par un corps noir à 325 K (Kelvin), à travers la partie supérieure d'un disque opaque rotatif qui comporte trois ouvertures en rainures radiales. La matrice 10a est conjuguée optiquement avec le disque rotatif, et l'axe de rotation du disque est parallèle à l'axe optique de l'optique de conjugaison utilisée. La vitesse de rotation du disque est de 1,5 tour par seconde, et la cadence de saisie des images brutes est de 60 images par seconde, correspondant à une durée entre les instants respectifs de lecture de deux images brutes successives quelconques qui est égale à 16,7 ms. Le diagramme de [Fig. 6] reproduit les valeurs des signaux bruts de détection qui sont lus dans une ligne de la matrice 10a pour deux images brutes saisies successivement dans la vidéo, désignées respectivement par $S_{brut}(t-\Delta)$ et $S_{brut}(t)$. Il reproduit aussi les valeurs d'intensités de points d'image pour la même ligne de la matrice 10a, pour l'image corrigée $S_{corr}(t)$ qui est obtenue selon l'invention à partir des deux images brutes $S_{brut}(t-\Delta)$ et $S_{brut}(t)$. Le déplacement d'une des rainures radiales du disque rotatif est visible entre les deux images brutes : de la droite du diagramme vers la gauche. L'axe horizontal du diagramme de [Fig. 6] repère, par leurs numéros de colonne $n_c$, les éléments sensibles 1 de la ligne considérée dans la matrice 10a, et l'axe vertical repère les valeurs I des signaux bruts de détection ou les valeurs d'intensités de points d'image, pour les trois images $S_{brut}(t)$, $S_{brut}(t-\Delta)$ et $S_{corr}(t)$. Les fronts d'intensité progressivement inclinés qui correspondent aux deux bords de la rainure dans les images brutes $S_{brut}(t)$ et $S_{brut}(t-\Delta)$ constituent un effet de filé, dû à la combinaison du déplacement de la rainure avec l'effet de mémoire des éléments sensibles 1. Dans l'image corrigée $S_{corr}(t)$, les deux bords de la rainure apparaissent plus nets, montrant l'efficacité de la compensation de l'effet de mémoire. Pour cet exemple, les formules fournies plus haut dans la présente description pour les coefficients $\alpha$ et $\beta$ aboutissent à $S_{i,j\_corr}(t)=1,437 \times S_{i,j\_brut}(t) - 0,437 \times S_{i,j\_brut}(t-\Delta)$. De façon générale, l'ajustement du rapport entre la durée $\Delta$ qui sépare des images brutes successives d'une séquence vidéo et le temps caractéristique de réponse $\tau$ des éléments sensibles peut dépendre d'un compromis entre réduction de l'effet de filé, amélioration du rendu géométrique des éléments de scène dans les images, et amplification du bruit d'image dans les images corrigées. A titre d'exemple, des valeurs qui sont comprises entre 0,02 et 0,2 pour le rapport $\Delta/\tau$ peuvent être adaptées lorsque le rapport signal-sur-bruit de l'image brute est supérieur à 150, respectivement 15.

Il est entendu que l'invention peut être reproduite en modifiant des aspects secondaires des modes de mise en oeuvre qui ont été décrits en détail ci-dessus, tout en conservant certains au moins des avantages cités. Notamment, la sélection des images brutes qui sont combinées par paires pour obtenir les images corrigées, peut être modifiée par rapport aux exemples illustrés. En outre, il est rappelé que l'utilisation d'un coefficient $\beta$ qui dépend de la durée $\Delta$ entre les images brutes qui sont combinées pour former une image corrigée, est optionnelle, même si le coefficient $\alpha$ qui est utilisé est calculé en fonction de cette durée $\Delta$.

**Revendications**

1. Procédé de saisie d'images, suivant lequel plusieurs images sont saisies successivement en utilisant une même matrice (10a) d'éléments sensibles (1), chaque élément sensible présentant un effet de mémoire à cause duquel un signal brut de détection ($S_{i,j\_brut}(t)$) dudit élément sensible dépend d'une quantité de rayonnement reçue par ledit élément sensible à un instant de lecture auquel le signal brut de détection est lu, mais dépend aussi de quantités de rayonnement reçues par ledit élément sensible avant ledit instant de lecture,

   le procédé étant **caractérisé en ce que**, pour former une image qui est corrigée au moins partiellement de l'effet de mémoire, appelée image corrigée ($S_{corr}(t)$), une valeur d'intensité de point d'image ($S_{i,j\_corr}(t)$) est attribuée séparément à chacun des éléments sensibles (1) de la matrice (10a), ladite valeur d'intensité de point d'image étant proportionnelle à une différence entre le signal brut de détection ($S_{i,j\_brut}(t)$) de l'élément sensible tel que lu pour une nouvelle image saisie, appelée nouvelle image brute ($S_{brut}(t)$), et une partie du signal brut de détection ($S_{i,j\_brut}(t-\Delta)$) du même élément sensible tel que lu pour une autre image, appelée image brute antérieure ($S_{brut}(t-\Delta)$), qui a été saisie avant ladite nouvelle image brute,
   la valeur d'intensité de point d'image ($S_{i,j\_corr}(t)$) qui est attribuée à chacun des éléments sensibles (1) pour former l'image corrigée ($S_{corr}(t)$), étant proportionnelle à un résultat d'une division par $[1 - \exp(-\Delta/\tau)]$ d'une différence entre le signal brut de détection ($S_{i,j\_brut}(t)$) de l'élément sensible tel que lu pour la nouvelle image brute ($S_{brut}(t)$), et un résultat d'une multiplication par $\exp(-\Delta/\tau)$ du signal brut de détection ($S_{i,j\_brut}(t-\Delta)$) du même élément sensible tel que lu pour l'image brute antérieure ($S_{brut}(t-\Delta)$), où $\exp(.)$ désigne une fonction exponentielle, $\tau$ est un temps caractéristique de réponse de l'élément sensible, et $\Delta$ est une durée non-nulle entre les instants de lecture dudit élément sensible respectivement pour la nouvelle image brute et l'image brute antérieure.

2. Procédé selon la revendication 1, suivant lequel la durée $\Delta$ entre les instants de lecture respectifs d'un même élément sensible (1) respectivement pour la nouvelle image brute ($S_{brut}(t)$) et pour l'image brute antérieure ($S_{brut}(t-\Delta)$), est inférieure au temps caractéristique de réponse $\tau$ dudit élément sensible.

3. Procédé selon l'une quelconque des revendications précédentes, suivant lequel l'image brute antérieure ($S_{brut}(t-\Delta)$) est la dernière de plusieurs images qui ont été saisies avant la nouvelle image brute ($S_{brut}(t)$), selon un ordre chronologique de saisie des images brutes.

4. Procédé selon l'une quelconque des revendications précédentes, suivant lequel chaque élément sensible (1) est un bolomètre ou un microbolomètre, une thermopile, un capteur pyroélectrique, un capteur ferroélectrique, ou un capteur à microlevier déformable thermiquement.

5. Procédé selon l'une quelconque des revendications 1 à 4, suivant lequel chaque image corrigée ($S_{corr}(t)$, $S_{corr}(t-(\Delta_1+\Delta_2))$) est formée à partir d'un couple d'images brutes, comprenant une nouvelle image brute ($S_{brut}(t)$, $S_{brut}(t-(\Delta_1+\Delta_2))$) et une image brute antérieure ($S_{brut}(t-\Delta_1)$, $S_{brut}(t-(2\Delta+\Delta_2))$) qui a été saisie avant ladite nouvelle image brute, et suivant lequel les couples d'images brutes qui sont utilisés pour former des images corrigées successives, sont disjoints, non-entrelacés et successifs chronologiquement.

6. Procédé selon l'une quelconque des revendications 1 à 4, suivant lequel plusieurs images corrigées ($S_{corr\_1}$, $S_{corr\_2}$, $S_{corr\_3}$, $S_{corr\_4}$) sont formées en combinant une même nouvelle image brute ($S_{brut}(t)$) avec plusieurs images brutes antérieures ($S_{brut}(t-\Delta)$, $S_{brut}(t-2\Delta)$, $S_{brut}(t-3\Delta)$, $S_{brut}(t-4\Delta)$) saisies successivement avant la nouvelle image brute, et suivant lequel chaque image corrigée est obtenue en utilisant pour la durée $\Delta$ qui est relative à chaque élément sensible (1), la différence entre les instants de lecture dudit élément sensible respectivement pour ladite nouvelle image brute et pour l'image brute antérieure qui sont combinées pour former ladite image corrigée.

7. Capteur d'images (10), comprenant :

- une matrice (10a) d'éléments sensibles (1), chaque élément sensible présentant un effet de mémoire à cause duquel un signal brut de détection ($S_{i,j\_brut}(t)$) qui est lu à partir dudit élément sensible dépend d'une quantité de rayonnement reçue par ledit élément sensible à un instant de lecture auquel le signal brut de détection est lu, mais dépend aussi de quantités de rayonnement reçues par ledit élément sensible avant ledit instant de lecture, et

- un module de traitement d'images (11), adapté pour fournir en sortie des images corrigées au moins partiellement de l'effet de mémoire, appelées images corrigées ($S_{corr}(t)$), chaque image corrigée étant formée par des valeurs d'intensités de points d'image ($S_{i,j\_corr}(t)$) qui sont attribuées respectivement aux éléments sensibles (1) de la matrice (10a), le module de traitement d'images étant adapté pour calculer la valeur d'intensité de point d'image de l'un quelconque des éléments sensibles comme étant proportionnelle à une différence entre le signal brut de détection ($S_{i,j\_brut}(t)$) dudit élément sensible tel que lu pour une nouvelle image saisie, appelée nouvelle image brute ($S_{brut}(t)$), et une partie du signal brut de détection ($S_{i,j\_brut}(t-\Delta)$) du même élément sensible tel que lu pour une autre image, appelée image brute antérieure ($S_{brut}(t-\Delta)$), qui a été saisie avant ladite nouvelle image brute,

la valeur d'intensité de point d'image ($S_{i,j\_corr}(t)$) qui est attribuée à chacun des éléments sensibles (1) pour former l'image corrigée ($S_{corr}(t)$), étant proportionnelle à un résultat d'une division par [1 - exp($-\Delta/\tau$)] d'une différence entre le signal brut de détection ($S_{j,j\_brut}(t)$) de l'élément sensible tel que lu pour la nouvelle image brute ($S_{brut}(t)$), et un résultat d'une multiplication par exp($-\Delta/\tau$) du signal brut de détection ($S_{i,j\_brut}(t-\Delta)$) du même élément sensible tel que lu pour l'image brute antérieure ($S_{brut}(t-\Delta)$), où exp(.) désigne une fonction exponentielle, $\tau$ est un temps caractéristique de réponse de l'élément sensible, et $\Delta$ est une durée non-nulle entre les instants de lecture dudit élément sensible respectivement pour la nouvelle image brute et l'image brute antérieure.

8. Capteur d'images (10) selon la revendication 7, adapté pour mettre en oeuvre un procédé qui est conforme à l'une quelconque des revendications 1 à 6.

**Patentansprüche**

1. Verfahren zum Erfassen von Bildern, bei welchem mehrere Bilder nacheinander unter Verwendung einer gleichen Matrix (10a) von sensitiven Elementen (1) erfasst werden, wobei jedes sensitive Element einen Memory-Effekt aufweist, aufgrund dessen ein Detektionsrohsignal ($S_{i,j\_brut}(t)$) des sensitiven Elements von einer Strahlungsmenge abhängt, die von dem sensitiven Element zu einem Auslesezeitpunkt empfangen wird, zu dem das Detektionsrohsignal ausgelesen wird, aber auch von Strahlungsmengen abhängt, die von dem sensitiven Element vor dem Auslesezeitpunkt empfangen wurden,

wobei das Verfahren **dadurch gekennzeichnet ist, dass** zur Bildung eines Bildes, das wenigstens teilweise um den Memory-Effekt korrigiert ist, das als korrigiertes Bild ($S_{corr}(t)$) bezeichnet wird, jedem der sensitiven Elemente (1) der Matrix (10a) separat ein Bildpunktintensitätswert ($S_{i,j\_corr}(t)$) zugeordnet wird, wobei der Bildpunktintensitätswert proportional zu einer Differenz zwischen dem Detektionsrohsignal ($S_{i,jbrut}(t)$) des sensitiven Elements, wie es für ein neu erfasstes Bild, genannt neues Rohbild ($S_{brut}(t)$), ausgelesen wird, und einem Teil des Rohdetektionssignals ($S_{i,j\_brut}(t-\Delta)$) desselben sensitiven Elements, wie es für ein anderes Bild, genannt früheres Rohbild ($S_{brut}(t-\Delta)$), ausgelesen wird, das vor dem neuen Rohbild erfasst wurde,

wobei der Bildpunktintensitätswert ($S_{i,j\_corr}(t)$), der jedem der sensitiven Elemente (1) zugeordnet wird, um das korrigierte Bild ($S_{corr}(t)$) zu bilden, proportional zu einem Ergebnis einer Division ist durch [1- exp($-\Delta/\tau$)] einer Differenz zwischen dem Detektionsrohsignal ($S_{i,j\_brut}(t)$) des sensitiven Elements, wie es für das neue Rohbild ($S_{brut}(t)$) ausgelesen wurde, und einem Ergebnis einer Multiplikation mit exp($-\Delta/\tau$) des Detektions-Rohsignals ($S_{i,j\_brut}(t-\Delta)$) desselben sensitiven Elements, wie es für das frühere Rohbild ($S_{brut}(t-\Delta)$) gelesen wurde, wobei exp(.) eine Exponentialfunktion bezeichnet, $\tau$ eine charakteristische Ansprechzeit des sensitiven Elements ist, und $\Delta$ eine von Null verschiedene Zeitdauer zwischen den Auslesezeitpunkten des sensitiven Elements jeweils für das neue Rohbild und das frühere Rohbild ist.

2. Verfahren nach Anspruch 1, wobei die Dauer $\Delta$ zwischen den jeweiligen Lesezeitpunkten desselben sensitiven Elements (1) jeweils für das neue Rohbild ($S_{brut}(t)$) und für das frühere Rohbild ($S_{brut}(t-\Delta)$), kleiner ist als die charakteristische Ansprechzeit $\tau$ des sensitiven Elements.

3. Verfahren nach einem der vorhergehenden Ansprüche, wobei das frühere Rohbild ($S_{brut}(t-\Delta)$) das letzte von mehreren Bildern ist, die vor dem neuen Rohbild ($S_{brut}(t)$) in einer chronologischen Reihenfolge der Erfassung der Rohbilder erfasst wurden.

4. Verfahren nach einem der vorhergehenden Ansprüche, wobei jedes sensitive Element (1) ein Bolometer oder Mikrobolometer, eine Thermosäule, ein pyroelektrischer Sensor, ein ferroelektrischer Sensor oder ein thermisch verformbarer Mikrohebelsensor ist.

5. Verfahren nach einem der Ansprüche 1 bis 4, wobei jedes korrigierte Bild ($S_{corr}(t)$, ($S_{corr}(t-(\Delta_1+\Delta_2))$)) aus einem Rohbildpaar gebildet wird, das ein neues Rohbild ($S_{brut}(t)$, $S_{brut}(t-(\Delta_1+\Delta_2))$)) und ein früheres Rohbild ($S_{brut}(t-\Delta_1)$, $S_{brut}(t-(2\Delta_1+\Delta_2))$)), umfasst, das vor dem neuen Rohbild erfasst wurde, und wobei die Paare von Rohbildern, die verwendet werden, um aufeinanderfolgende korrigierte Bilder zu bilden, voneinander getrennt, nicht verschachtelt und chronologisch aufeinanderfolgend sind.

6. Verfahren nach einem der Ansprüche 1 bis 4, wobei mehrere korrigierte Bilder ($S_{corr\_1}$, $S_{corr\_2}$, $S_{corr\_3}$, $S_{corr\_4}$) gebildet werden, indem ein und dasselbe neue Rohbild ($S_{brut}(t)$) mit mehreren früheren Rohbildern ($S_{brut}(t-\Delta)$, $S_{brut}(t-2\Delta)$, $S_{brut}(t-3\Delta)$, $S_{brut}(t-4\Delta)$) kombiniert wird, die nacheinander vor dem neuen Rohbild erfasst wurden, und wobei jedes korrigierte Bild erhalten wird, indem für die Zeit $\Delta$, die sich auf jedes sensitive Element (1) bezieht, die Differenz zwischen den Auslesezeitpunkten des sensitiven Elements jeweils für das neue Rohbild und für das vorherige Rohbild verwendet wird, die kombiniert werden, um das korrigierte Bild zu bilden.

7. Bildsensor (10), umfassend:

- eine Matrix (10a) von sensitiven Elementen (1), wobei jedes sensitive Element einen Memory-Effekt aufweist, aufgrund dessen ein Detektionsrohsignal ($S_{i,j\_brut}(t)$), das aus dem sensitiven Element ausgelesen wird, von einer Strahlungsmenge abhängt, die von dem sensitiven Element zu einem Auslesezeitpunkt empfangen wird, zu dem das Detektionsrohsignal ausgelesen wird, aber auch von Strahlungsmengen abhängt, die von dem sensitiven Element vor dem Auslesezeitpunkt empfangen wurden, und
- ein Bildverarbeitungsmodul (11), das derart beschaffen ist, dass es wenigstens teilweise um den Speichereffekt korrigierte Bilder ausgibt, die als korrigierte Bilder ($S_{corr}(t)$) bezeichnet werden, wobei jedes korrigierte Bild durch Bildpunktintensitätswerte ($S_{i,j\_corr}(t)$) gebildet wird, die jeweils den sensitiven Elementen (1) der Matrix (10a) zugeordnet werden, wobei das Bildverarbeitungsmodul dazu ausgebildet ist, den Bildpunktintensitätswert eines beliebigen der sensitiven Elemente als proportional zu einer Differenz zwischen dem Detektionsrohsignal ($S_{i,j\_brut}(t)$) des sensitiven Elements, wie es für ein neu erfasstes Bild gelesen wird, zu berechnen, das als neues Rohbild ($S_{brut}(t)$) bezeichnet wird, und einem Teil des Detektionsrohsignals ($S_{i,j\_brut}(t-\Delta)$) desselben sensitiven Elements,

wie es für ein anderes Bild, das als früheres Roh-bild ($S_{brut}(t-\Delta)$) bezeichnet wird, ausgelesen wurde, das vor dem neuen Rohbild erfasst wurde,

wobei der Bildpunktintensitätswert ($S_{i,j\_corr}(t)$), der jedem der sensitiven Elemente (1) zugeordnet wird, um das korrigierte Bild ($S_{corr}(t)$) zu bilden, proportional zu einem Ergebnis einer Division ist durch [1-$\exp(-\Delta/\tau)$] einer Differenz zwischen dem Detektionsrohsignal ($S_{i,j\_brut}(t)$) des sensitiven Elements, wie es für das neue Rohbild ($S_{brut}(t)$) ausgelesen wurde, und einem Ergebnis einer Multiplikation mit $\exp(-\Delta/\tau)$ des Detektions-Rohsignals ($S_{i,j\_brut}(t-\Delta)$) desselben sensitiven Elements, wie es für das frühere Roh-bild ($S_{brut}(t-\Delta)$) ausgelesen wurde, wobei exp(.) eine Exponentialfunktion bezeichnet, $\tau$ eine charakteristische Ansprechzeit des sensitiven Elements ist, und $\Delta$ eine von Null verschiedene Zeitdauer zwischen den Auslesezeitpunkten des sensitiven Elements jeweils für das neue Rohbild und das frühere Rohbild.

**8.** Bildsensor (10) nach Anspruch 7, der dazu ausgebildet ist, ein Verfahren nach einem der Ansprüche 1 bis 6 auszuführen.


**Claims**

**1.** A method for capturing images, wherein several images are successively captured using a same matrix (10a) of sensitive elements (1), each sensitive element exhibiting a memory effect which makes a raw detection signal ($S_{i,j\_raw}(t)$) of said sensitive element depend on an amount of radiation received by said sensitive element at a read-out time at which the raw detection signal is read, but also depend on amounts of radiation received by said sensitive element before said read-out time,

the method being **characterized in that**, in order to form an image which is at least partially corrected for the memory effect, called corrected image ($S_{corr}(t)$), an image point intensity value ($S_{i,j\_corr}(t)$) is assigned separately to each of the sensitive elements (1) of the matrix (10a), said image point intensity value being proportional to a difference between the raw detection signal ($S_{i,j\_raw}(t)$) of the sensitive element as read for a new captured image, called new raw image ($S_{raw}(t)$), and a part of the raw detection signal ($S_{i,j\_raw}(t-\Delta)$) of the same sensitive element as read for another image, called prior raw image ($S_{raw}(t-\Delta)$), which was captured before said new raw image,
the image point intensity value ($S_{i,j\_corr}(t)$) which is attributed to each of the sensitive elements (1) in order to form the corrected image ($S_{corr}$

(t)), being proportional to a result of dividing by [1 - $\exp(-\Delta/\tau)$] a difference between the raw detection signal ($S_{i,j\_raw}(t)$) of the sensitive element as read for the new raw image ($S_{raw}(t)$), and the result of multiplying by $\exp(-\Delta/\tau)$ the raw detec-tion signal ($S_{i,j\_raw}(t-\Delta)$) of the same sensitive element as read for the prior raw image ($S_{raw}(t-\Delta)$), where exp(.) designates an exponential function, $\tau$ is a characteristic response time of the sensitive element, and $\Delta$ is a non-zero duration between the read-out times of said sensitive element respectively for the new raw image and the prior raw image.

**2.** The method according to claim 1, wherein the dura-tion $\Delta$ between the respective read-out times of a same sensitive element (1) respectively for the new raw image ($S_{raw}(t)$) and for the prior raw image ($S_{raw}(t-\Delta)$), is less than the characteristic response time $\tau$ of said sensitive element.

**3.** The method according to any one of the preceding claims, wherein the prior raw image ($S_{raw}(t-\Delta)$) is the last one of several images that have been captured before the new raw image ($S_{raw}(t)$), according to a chronological order of capture of the raw images.

**4.** The method according to any one of the preceding claims, wherein each sensitive element (1) is a bolometer or a microbolometer, a thermopile, a pyroelectric sensor, a ferroelectric sensor, or a thermally deformable microlever sensor.

**5.** The method according to any one of claims 1 to 4, wherein each corrected image ($S_{corr}(t)$, $S_{corr}(t-(\Delta_1+\Delta_2))$) is formed from a pair of raw images, comprising a new raw image ($S_{raw}(t)$, $S_{raw}(t-(\Delta_1+\Delta_2))$) and a prior raw image ($S_{raw}(t-\Delta_1)$, $S_{raw}(t-(2\Delta+\Delta_2))$) that has been captured before said new raw image, and wherein the pairs of raw images used to form successive corrected images are disjoint, non-interlaced, and chronologically successive.

**6.** The method according to any one of claims 1 to 4, wherein several corrected images ($S_{corr\_1}$, $S_{corr\_2}$, $S_{corr\_3}$, $S_{corr\_4}$) are formed by combining a same new raw image ($S_{raw}(t)$) with several prior raw images ($S_{raw}(t-\Delta)$, $S_{raw}(t-2\Delta)$, $S_{raw}(t-3\Delta)$, $S_{raw}(t-4\Delta)$) succes-sively captured before the new raw image, and wherein each corrected image is obtained by using for the duration $\Delta$ relating to each sensitive element (1), the difference between the read-out times of said sensitive element respectively for said new raw image and for the prior raw image which are combined to form said corrected image.

**7.** An image sensor (10), comprising:

- a matrix (10a) of sensitive elements (1), each sensitive element exhibiting a memory effect which makes a raw detection signal ($S_{i,j\_raw}(t)$) that is read from said sensitive element depend on an amount of radiation received by said sensitive element at a read-out time at which the raw detection signal is read, but also depend on amounts of radiation received by said sensitive element before said read-out time, and

- an image processing module (11), adapted for outputting images at least partially corrected for the memory effect, called corrected images ($S_{corr}(t)$), each corrected image being formed by image point intensity values ($S_{i,j\_corr}(t)$) which are respectively assigned to the sensitive elements (1) of the matrix (10a), the image processing module being adapted for calculating the image point intensity value of any one of the sensitive elements as being proportional to a difference between the raw detection signal ($S_{i,j\_raw}(t)$) of said sensitive element as read for a new captured image, called new raw image ($S_{raw}(t)$), and a part of the raw detection signal ($S_{i,j\_raw}(t-\Delta)$) of the same sensitive element as read for another image, called prior raw image ($S_{raw}(t-\Delta)$), which was captured before said new raw image,

the image point intensity value ($S_{i,j\_corr}(t)$) which is assigned to each of the sensitive elements (1) in order to form the corrected image ($S_{corr}(t)$), being proportional to a result of dividing by [1 - exp($-\Delta/\tau$)] a difference between the raw detection signal ($S_{i,j\_raw}(t)$) of the sensitive element as read for the new raw image ($S_{raw}(t)$), and a result of multiplying by exp($-\Delta/\tau$) the raw detection signal ($S_{i,j\_raw}(t-\Delta)$) of the same sensitive element as read for the prior raw image ($S_{raw}(t-\Delta)$), where exp(.) denotes an exponential function, $\tau$ is a characteristic response time of the sensitive element, and $\Delta$ is a non-zero duration between the read-out times of said sensitive element respectively for the new raw image and the prior raw image.

8. The image sensor (10) according to claim 7, adapted for implementing a method which is in accordance with any one of claims 1 to 6.

FIG. 1

FIG. 2

$S_{brut}(t-(2\Delta_1+\Delta_2))$

$S_{i,j\_brut}(t-(2\Delta_1+\Delta_2))$

$S_{corr}(t-(\Delta_1+\Delta_2))$

$S_{i,j\_brut}(t-(\Delta_1+\Delta_2))$

$S_{i,j\_corr}(t-(\Delta_1+\Delta_2))$

$\Delta_1$

$\Delta_2$

$S_{brut}(t-(\Delta_1+\Delta_2))$

$S_{brut}(t-\Delta_1)$

$S_{i,j\_brut}(t-\Delta_1)$

$S_{corr}(t)$

$S_{brut}(t)$

$S_{i,j\_brut}(t)$

$S_{i,j\_corr}(t)$

$\Delta_1$

t

## FIG. 3

$S_{brut}(t-4\Delta)$

$S_{i,j\_brut}(t-4\Delta)$

$\Delta$

$S_{brut}(t-3\Delta)$

$S_{i,j\_brut}(t-3\Delta)$

$\Delta$

$S_{brut}(t-2\Delta)$

$S_{i,j\_brut}(t-2\Delta)$

$\Delta$

$S_{brut}(t-\Delta)$

$S_{i,j\_brut}(t-\Delta)$

$S_{corr\_4}$

$S_{corr\_3}$

$\Delta$

$S_{brut}(t)$

$S_{i,j\_brut}(t)$

$S_{i,j\_corr\_4}$

$S_{corr\_2}$

$S_{i,j\_corr\_3}$

$S_{i,j\_corr\_2}$

t

$S_{i,j\_corr\_1}$

## FIG. 4

$S_{corr\_1}$

FIG. 5

**FIG. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3301640 A1

- US 2005185755 A1